(19) Europäisches Patentamt
European Patent Office
Office européen des brevets

(11) **EP 4 137 901 A1**

(12) **EUROPEAN PATENT APPLICATION**
published in accordance with Art. 153(4) EPC

(43) Date of publication:
**22.02.2023 Bulletin 2023/08**

(21) Application number: **21858662.6**

(22) Date of filing: **20.08.2021**

(51) International Patent Classification (IPC):
**G05B 23/02** (2006.01)   **G06K 9/62** (2006.01)
**G06N 20/00** (2019.01)

(52) Cooperative Patent Classification (CPC):
**G05B 23/02; G06F 18/00; G06N 20/00**

(86) International application number:
**PCT/KR2021/011162**

(87) International publication number:
**WO 2022/039575 (24.02.2022 Gazette 2022/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.08.2020 US 202063068387 P**

(71) Applicant: **Realtimetech Co., Ltd.**
**Daejeon 34036 (KR)**

(72) Inventors:
• **PARK, Jeong Hwan**
**Daejeon 34036 (KR)**
• **JIN, Hong Suk**
**Daejeon 34036 (KR)**
• **JIN, Seong Il**
**Daejeon 34036 (KR)**

(74) Representative: **Atout PI Laplace**
**Immeuble "Visium"**
**22, avenue Aristide Briand**
**94117 Arcueil Cedex (FR)**

(54) **DEEP-LEARNING-BASED REAL-TIME PROCESS MONITORING SYSTEM, AND METHOD THEREFOR**

(57)   The present invention relates to a deep-learning-based real-time process monitoring system and method, which register and learn an object to be recognized in a process, detect features of the object from a real-time video through classification of the object into a moving object, a status object, and a vector object based on a trained model, and monitor a progress state of the process through classification of an actually progressing process according to the features, thereby enabling easy detection of an abnormality of the process or the object while achieving improvement in performance of process monitoring and abnormality detection by processing the real-time video with small resources.

FIG. 1

**Description**

[Technical Field]

The present invention relates to a deep learning based real-time process monitoring system and method that detect an abnormality through object detection by monitoring actual progression of a production process in real time through a video to check a progress state of the production process.

[Background Art]

A technique for detecting a particular area or a particular object based on a video is applied not only to security systems, but also to various fields, such as road condition monitoring, production facilities, and the like, and has been introduced into a production process to monitor actual progression of the process while checking the state of an object during the process.

Korean Patent Registration No. 10-2277162 relates to an industrial robot monitoring apparatus and a method of driving the same, in which an image captured by photographing the industrial robot through a camera is analyzed to detect an abnormality in movement of the robot in performing a designated operation of the robot.

However, although this method can detect an abnormality in movement of the robot, this method does not classify the steps of the process and thus has a problem in that it is difficult to determine which step a certain image corresponds to, in the event where the same operation is repeated within the process.

Moreover, since it is necessary to process a large number of image streams in real time in order to monitor the overall process and classify the process, there is difficulty in application of the above technology due to consumption of large amounts of resources for image processing.

Therefore, there is a need for improvement in processing performance and accuracy for streaming images to achieve effective monitoring of the process using images continuously obtained through a stationary camera.

[Disclosure]

[Technical Problem]

The present invention was created due to the above necessity and it is an aspect of the present invention to provide a deep learning based real-time process monitoring system and method that detect an abnormality based on a state of an object extracted from an image by monitoring actual progression of a process using image recognition technology in real time.

It is another aspect of the present invention to provide a deep learning based real-time process monitoring system and method that detect an error trend and occurrence of abnormalities in an on-going process through classification of the process using an extracted pattern of an object.

[Technical Solution]

In accordance with an aspect of the present invention, a deep learning based real-time process monitoring system includes: a learning device performing deep learning through classification of an object to be recognized in a process into a moving object, a status object and a vector object in registration of the object; and a monitoring device extracting features with respect to the moving object, the status object and the vector object from a real-time video acquired during the process based on a model trained by the learning device, classifying the process through comparison of a real-time feature pattern set from a set of the extracted features with a pre-stored process pattern, and monitoring a progress state of the process through detection of abnormalities of the process and the object

The monitoring device includes: a video acquisition unit including a plurality of cameras provided to equipment performing the process; an object detection unit classifying the object in the process into the moving object, the status object and the vector object and detecting the features of the object from a real-time video; a process classification unit analyzing the detected features of the object in frame units to detect the real-time feature pattern and classifying the process according to a degree of similarity through comparison of the real-time feature pattern with the process feature pattern; and an abnormality detection unit detecting an abnormality from the real-time feature pattern and the features of the object.

The object detection unit may acquire a difference between a frame of a first time and a frame of a second time through analysis of a video in frame units with respect to the moving object to detect a change of the object included in each frame and may perform post-processing through expansion and multiplication with respect to the change.

The object detection unit may perform outline detection and grouping with respect to a frame subjected to post-processing, may perform deletion or integration of overlapping boxes among boxes generated by grouping while enlarging the boxes, and may extract the features of the moving object by determining a shape of each of images of the boxes using an AI image classification neural network.

The process classification unit may analyze the degree of similarity through comparison of the real-time feature pattern with the process feature pattern to classify the process with a process feature pattern having the highest degree of similarity.

The process classification unit may perform a matching operation through analysis of the process feature pattern and the real-time feature pattern by a branch method and may perform parallel processing with respect to a plurality of process feature patterns through previous sliding of the process features to compare the real-time feature pattern extracted from each frame with the plurality of process feature patterns.

The process classification unit may set a feature set with respect to each of the moving object, the status object and the vector object having features detected from a frame at timestamp t, may compare a preset process feature set with a real-time feature set acquired in real time to calculate a loss function, and may calculate a loss value through a loss function acquired through comparison of feature sets with respect to a plurality of frames with each other and a loss value through a time-series loss function according to the number of timestamps with respect to the plurality of frames.

The process classification unit may set a start examination zone and an end examination zone with respect to the process feature pattern based on data with respect to a start time and an end time of the process, and may perform loss examination with the real-time feature pattern for each branch of the real-time video to determine that the process is started or ended when a loss value between a feature set with respect to the start examination zone or the end examination zone and a feature set of the real-time feature pattern is smaller than a second threshold.

The abnormality detection unit may calculate a loss value by comparing a plurality of features extracted corresponding to a plurality of objects with pre-stored data to detect an abnormality of a certain object according to the loss value, a change of the loss value over time, and a period of time for which the loss value is maintained at a predetermined value or more, with respect to the plurality of objects.

The abnormality detection unit may exclude a corresponding object in abnormality determination even in the case where any one of the plurality of objects has an abnormality, when the degree of similarity between the real-time feature pattern and the process feature pattern is less than or equal to a predetermined value.

In accordance with another aspect of the present invention, a method of driving the deep learning based real-time process monitoring system according to the present invention includes: registering an object to be recognized in a process through classification of the object into a moving object, a status object and a vector object, followed by performing deep learning through test operation of the process; extracting features with respect to the moving object, the status object and the vector object from a real-time video acquired during the process based on trained data; classifying the process through comparison of a real-time feature pattern set from a set of the extracted features with a pre-stored process pattern; detecting an abnormality by monitoring the features of the object and actual progression of the process; and storing data with respect to a progress state of the process.

The step of extracting features may include: tracking and detecting the moving object by mapping an object detection result between frames of the real-time video through tracking; acquiring a difference between a frame of a first time and a frame of a second time through analysis of the real-time video in frame units, followed by detecting a change of the object included in each frame to perform post-processing through expansion and multiplication with respect to the change; performing outline detection and grouping with respect to a frame subjected to post-processing; performing deletion or integration of overlapped boxes with respect to boxes generated by grouping while enlarging the boxes; and extracting the features of the moving object by determining a shape of each of images of the boxes using an AI image classification neural network.

The step of classifying the process may further include: setting a feature set with respect to each of the moving object, the status object and the vector object having features detected from a frame at timestamp t; comparing a real-time feature set acquired in real time with a preset process feature set to calculate a loss function; and calculating a loss function acquired through comparison of feature sets with respect to a plurality of frames with each other and a time-series loss function according to the number of timestamps with respect to the plurality of frames.

The step of classifying the process may further include: setting a start examination zone and an end examination zone with respect to the process feature pattern based on data with respect to a start time and an end time of the process; performing loss examination with the real-time feature pattern for each branch of the real-time video; and determining that the process is started or ended when a loss value between a feature set with respect to the start examination zone or the end examination zone and a feature set of the real-time feature pattern is smaller than a second threshold.

The step of detecting an abnormality may include: comparing a plurality of features extracted corresponding to a plurality of objects with pre-stored data to calculate each loss value, followed by detecting an abnormality of a certain object according to the loss value with respect to the plurality of objects, a change of the loss value over time, and a period of time for which the loss value is maintained at a predetermined value or more; and excluding the corresponding object in abnormality determination even in the case where any one of the plurality of objects has an abnormality, when the degree of similarity between the real-time feature pattern and the process feature pattern is less than or equal to a predetermined value.

[Advantageous Effects]

The deep learning based real-time process monitoring system and method according to the present invention can detect an object by analyzing a real-time video, can classify an actual on-going process through similarity analysis by extracting a pattern of time-series changes in the detected object, can detect an abnormality of the process, and can check a change trend of the process.

The deep learning based real-time process monitoring system and method according to the present invention can classify a process and detect an abnormality of the process based on a video acquired through a camera even without communication with equipment that controls the process.

The deep learning based real-time process monitoring system and method according to the present invention can analyze the state of an object in each process and can easily detect an abnormality of the object.

The deep learning based real-time process monitoring system and method according to the present invention can monitor a process through real-time processing of a video using a small amount of resources and can improve performance based on monitoring and abnormality detection.

[Description of Drawings]

FIG. 1 is a schematic block diagram of a deep learning based real-time process monitoring system according to one embodiment of the present invention.

FIG. 2 is a schematic block diagram of a process monitoring device shown in FIG. 1.

FIG. 3 is a flowchart illustrating a method of operating the deep learning based real-time process monitoring system according to the embodiment of the present invention.

FIG. 4 is reference views illustrating detection of an object in the deep learning based real-time process monitoring system according to the embodiment of the present invention.

FIG. 5 is a reference view illustrating a process-classification process of the deep learning based real-time process monitoring system according to the embodiment of the present invention.

FIG. 6 is a reference view illustrating a loss function of a feature set in the process-classification process of FIG. 5.

FIG. 7 is a reference view illustrating a method of processing a video in frame units in the process-classification process of FIG. 5.

FIG. 8 is a reference view illustrating a method of matching patterns in the process-classification process shown in FIG. 5.

FIG. 9 is a reference view illustrating a method of determining start and end of a process in the deep learning based real-time process monitoring system according to the embodiment of the present invention.

FIG. 10 is a graph depicting change in loss value of each object according to time in the deep learning based real-time process monitoring system according to the embodiment of the present invention.

[Best Mode]

Hereinafter, embodiments of the present invention will be described with reference to the accompanying drawings.

It should be understood that the drawings are not to precise scale and may be exaggerated in thickness of lines or size of components for descriptive convenience and clarity only. In addition, the terms used herein are defined by taking functions of the present invention into account and can be changed according to user or operator custom or intention. Therefore, definition of the terms should be made according to the overall disclosure set forth herein.

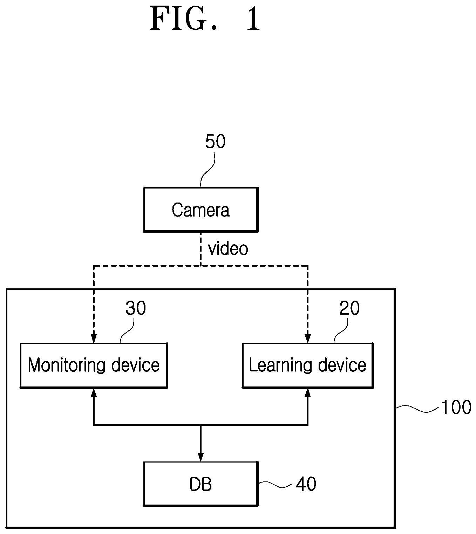

FIG. 1 is a schematic block diagram of a deep learning based real-time process monitoring system according to one embodiment of the present invention.

Referring to FIG. 1, a process monitoring system 100 according to the present invention includes a monitoring device 30, a learning device 20, and a database (DB) 40.

The process monitoring system 100 photographs a progress state of a manufacturing or production process through a plurality of cameras 50 and transmits a video of the progress state of the process to the monitoring device 30 or the learning device 20.

Even when the process monitoring system 100 is not connected to a process controller (not shown) that controls the manufacturing or production process, the process monitoring system 100 checks the progress state of the process through the image and monitors progression of the process through analysis of the video to detect an abnormality of an object or the progress.

The learning device 20, the monitoring device 30 and the database (DB) 40 share process data through communication with one another and the data is stored in the database (DB) 40.

In the process monitoring system 100, the learning device 20, the monitoring device 30 and the database (DB) 40 may be provided as a single device or may be provided as a plurality of separate devices.

The learning device 20 previously registers an object to be detected during the process, generates learning data for object detection such that the object can be recognized through a process video of equipment, and performs learning based on deep learning to store a learning model in the database (DB) 40.

The learning device 20 registers a location of the object during the process and information about the state of the object for each process to learn registered data through a plurality of videos. In addition, the learning device 20 extracts a pattern with respect to the object in each process based on the videos of the process and stores the pattern in the database (DB) 40.

The object refers to a target to be recognized during the process, such as a nozzle, a valve, a gate, and the like, and may differ depending on products to be produced or manufactured.

The learning device 20 registers the object after classification of the object as a feature extraction target into a moving object, a status object, and a vector obj ect.

The moving object refers to an object, such as a nozzle and a robot arm, which moves in the process, the status object refers to an object, such as a gate, a traffic lamp, and a valve, which has a variable status, and the vector object refers to an object, such as a liquid stream, a laser beam, an object circumference, and the like.

The learning device 20 classifies various objects constituting the process into three types of objects as described above, and registers basic information, such as identification ID and basic locations (identification locations) to distinguish the objects from each other.

The learning device 20 inputs the location and size of the moving object, the location and size of the status object in the first frame, and the type of status according to the objects. In addition, the learning device 20 inputs information about a starting point and an end point for the vector object.

When test operation of the equipment is performed for learning, the learning device 20 records a video acquired during the test operation and performs data generation and model learning for the object registered from the video.

The learning device 20 detects and registers a process feature pattern for each process based on behavior of the object, which is changed over time, from the video with respect to the process.

The learning device 20 may register patterns for a plurality of processes performed in a single piece of equipment and may register patterns for the steps of a process that is linked and operated in multiple pieces of equipment.

The learning device 20 may apply different artificial intelligent learning models to the moving object, the status object, and the vector object, respectively.

The monitoring device 30 classifies the process through detection of features with respect to the object from a video taken during the process and determines whether the process is normally carried out, based on data stored in the database (DB) 40 through the learning device 20.

The monitoring device 30 classifies the process through determination as to the type of current on-going process and determines the progress state of the process by analyzing similarity between a process feature pattern and a real-time feature pattern detected in real time through extraction of a pattern of the process and comparison of the extracted pattern with a previously registered pattern.

The monitoring device 30 classifies the current on-going process as a process matching the highest similarity to according to a result of similarity analysis.

The monitoring device 30 detects an abnormality of the object through comparison of extracted data with previously registered data.

The monitoring device 30 determines the state of the object by extracting the features with respect to the object to compare the extracted features with the previously registered data and detects an abnormality based on the real-time feature pattern, the shape, size, location and state of the object, and the like.

The monitoring device 30 compares the degree of similarity and a loss value and detects an abnormality corresponding to the loss value.

Further, the monitoring device 30 records a trend of change in the process or the object based on feature information and the result of similarity analysis with respect to the detected object during the process, generates data about occurrence of an abnormality, and stores the data in the database (DB) 40.

The learning device 20 and the monitoring device 30 include at least one processor and are provided with a memory or storage means for storing data.

The database (DB) 40 stores learning models and data with respect to the object registered by the learning device 20 as moving object data, status object data, and vector object data classified according to the kind of object.

The database (DB) 40 stores process feature patterns with respect to actual progression of each process.

The database (DB) 40 stores data from start to end of the process, abnormality data with respect to the process or the object, and analysis data with respect to change of the process.

Further, the database (DB) 40 includes a large capacity storage means, a processor for generating indexes for data stored in the large capacity storage means and managing the data, and a communication unit for communication with the learning device 20 and the monitoring device 30 to transmit or receive the data.

The process monitoring system 100 generates a report with respect to a process monitoring result of the monitoring device 30 to transmit the report to an external server (not shown) or a registered terminal (not shown). In addition, the process monitoring system 100 may output and transmit an alarm to the terminal upon detection of an abnormality.

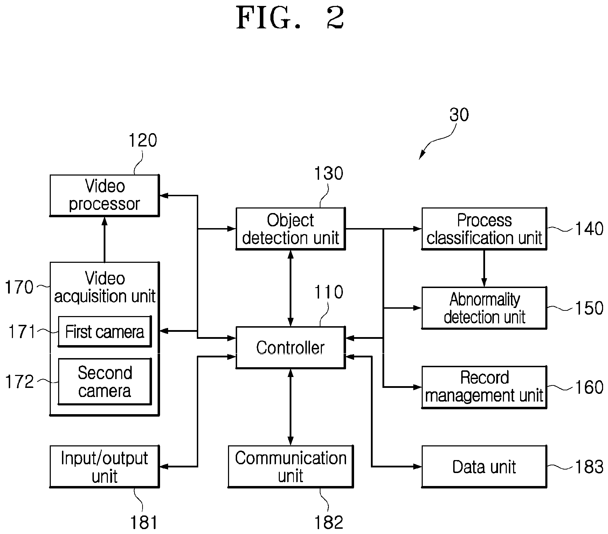

FIG. 2 is a schematic block diagram of a process monitoring device shown in FIG. 1.

Referring to FIG. 2, the monitoring device 30 includes a video acquisition unit 170, a video processor 120, an object detection unit 130, a process classification unit 140, an abnormality detection unit 150, a record management unit 160, a data unit 183, a communication unit 182, an input/output unit 181, and a controller 110 controlling the overall operation of the monitoring device.

The video acquisition unit 170 includes a plurality of cameras 171, 172.

The video acquisition unit 170 may include a first camera 171 and a second camera 172. It should be noted that the number of cameras is not limited to the drawings and may be increased according to the number of facilities to which the cameras are provided. In the video acquisition unit 170, the cameras are provided to each facility or each process and secured at predetermined locations.

The first camera 171 may be a camera adapted to photograph RGB images and the second camera 172 may be a thermal imaging camera or an infrared camera.

The video processor 120 converts a video input from the video acquisition unit 170 into a predetermined format. The video processor 120 removes noise from the image and performs preprocessing of the image. The video processor 120 divides the image into frame units for image processing.

The object detection unit 130 detects features of an object included in the video in frame units. The object detection unit 130 extracts the features of the object with respect to a moving object, a status object and a vector object, and classifies the features for each of the objects, based on learning models and object information stored in the database (DB) 40.

The process classification unit 140 extracts a change pattern of the features in a plurality of frames based on the features of the object extracted by the object detection unit 130.

The process classification unit 140 calculates the degree of similarity through comparison of the extracted patterns with previously registered patterns and classifies a current on-going process through determination as to the type of current on-going process based on the degree of similarity. In addition, the process classification unit 140 distinguishes start and end of the process.

The abnormality detection unit 150 detects an abnormality of the process by determining whether the steps of the process are normally performed based on the degree of similarity of the pattern.

In addition, the abnormality detection unit 150 detects an abnormality of the object according to the degree of similarity and a loss value of the features by comparing the detected features of the object with the registered data.

Upon detection of an abnormality, the abnormality detection unit 150 transmits an abnormality detection signal to the controller 110.

The record management unit 160 stores data with respect to progression of the process from start to end of the process and an abnormality detection signal when the abnormality detection unit 150 detects an abnormality.

The controller 110 shares the data with the learning device 20 and the database (DB) 40 through the communication unit 182. The controller 110 registers the data input through the input/output unit 181 and outputs a progress state of the process through the input/output unit 181.

The controller 110 outputs an alarm corresponding to the abnormality detection signal through the input/output unit 181 and transmits data with respect to abnormality detection to a terminal or a server designated through the communication unit 182.

The input/output unit 181 includes an input means, such as a button, a switch, and a touch pad, and an output means including at least one of a display, a speaker, and a lamp.

The data unit 183 stores data transmitted and received through the communication unit 182 and data input and output through the input/output unit 181.

The data unit 183 stores image data input through the video acquisition unit 170, data about the detected features of the object and the process feature pattern, data about a detected abnormality, and data about the process or object in which an abnormality occurs upon detection of the abnormality.

The data unit 183 is a storage means for storing data. The Data unit 183 may include a storage means, such as a flash memory, an HDD, an SSD, and the like, and may be connected to a movable memory device.

The communication unit 182 includes a plurality of communication modules and transmits or receives data through wired or electronic communication.

The communication unit 182 stores data received from the database (DB) 40 in the data unit 183 and transmits data generated by the record management unit to the database (DB) 40 in response to a control command from the controller 110.

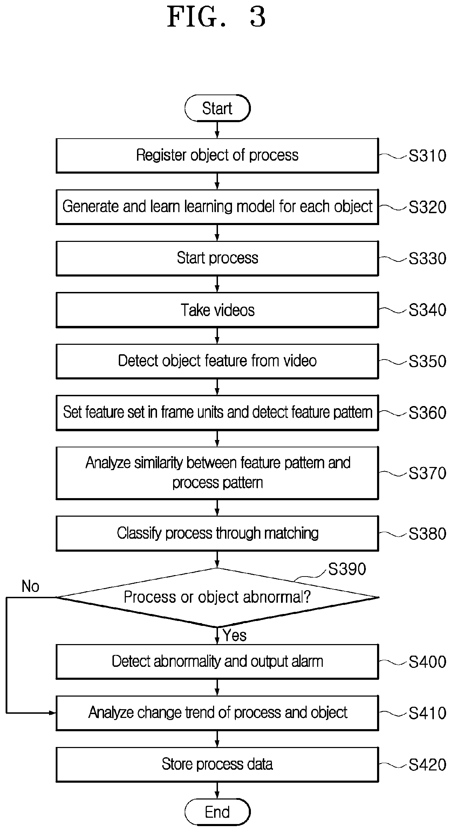

FIG. 3 is a flowchart illustrating a method of operating the deep learning based real-time process monitoring system according to the embodiment of the present invention.

Referring to FIG. 3, the process monitoring system registers and learns an object in a process through the learning device 20 during test operation of the process, monitors an actual on-going process based on a video through the monitoring device 30, and detects a progress state and abnormality of the process.

The learning device 20 classifies and registers the object to be recognized in the process according to the type of object (S310).

The learning device 20 generates and learns a learning model in a different way depending on the type of object to be recognized (S320).

The learning device 20 stores learning data and the learning model in the database (DB) 40.

When the process is started (S330), the monitoring device 30 takes videos with respect to the progress state of the process through a plurality of cameras 50, 170 (S340).

The monitoring device 30 detects features of the object from a real-time video using the learning model (S350). The monitoring device 30 detects the features by classifying the object in the image into a moving object, a status object, and a vector object.

The monitoring device 30 analyzes the video in frame units, sets a feature set with respect to features extracted for each frame, and detects real-time feature patterns (S360).

The monitoring device 30 compares the real-time feature patterns of the real-time video with pre-classified process feature patterns and analyzes the degree of similarity therebetween (S370).

The monitoring device 30 compares the real-time feature patterns with the process feature patterns in each frame and classifies the process through determination as to a current on-going process depending upon the degree of similarity and a loss value (S380).

The monitoring device 30 compares the features of the object detected from the video with previously registered data to detect an abnormality and compares the real-time feature patterns with the process feature patterns to detect an abnormality in progression of the process according to the trend of difference therebetween (S390).

Upon detection of an abnormality, the monitoring device 30 generates and stores data about abnormality detection, and outputs an alarm about the abnormality detection (S400).

When the process is normally ended, the monitoring device 30 analyzes and records the trend of change in the process (S410), and stores the data on the process in the database (DB) 40 (S420)).

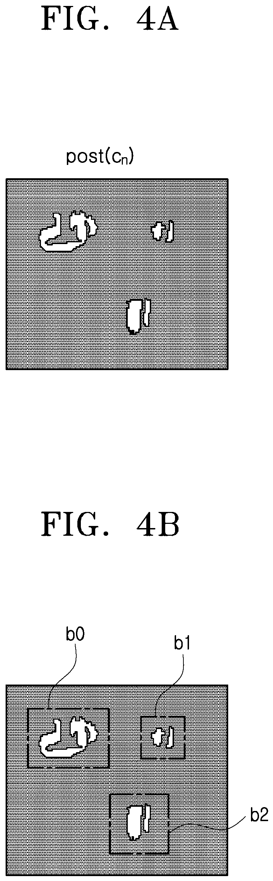

FIG. 4 is reference views illustrating detection of the object in the deep learning based real-time process monitoring system according to the embodiment.

The object detection unit 130 detects the features of the object from data preprocessed by the video processor 120.

The object detection unit 130 detects a moving object, a status object, and a vector object. The object detection unit 130 may use a different method depending on the objects to improve processing performance and accuracy in detection of the objects by processing the image.

The object detection unit 130 compares the location and shape of the detected features of the moving object with basic data including a movement start location and the shape of the moving object to map which moving object the detected object corresponds to.

In addition, the object detection unit 130 tracks and detects the moving object by mapping an object detection result between the frames of the video through tracking.

The object detection unit 130 performs noise removal and normalization with respect to a frame f(n-m) before a change reference time m with respect to a detection target frame fn.

The object detection unit 130 obtains a difference cn between two frames, specifically the preprocessed frame pre(fn) at a time n and the frame pre(f(n-m)) before a time m and converts the difference cn into a binary number. The object detection unit 130 performs binarization of the difference cn into 1 when a value obtained by subtracting the pre(f(n-m)) from the pre(fn) is greater than a predetermined value, or 0 in other cases.

The object detection unit 130 performs post-processing by performing expansion and multiplication with respect to the difference cn between the frames.

As shown in FIG. 4A, the object detection unit 130 performs outline detection and grouping with respect to the frames subjected to post-processing, performs deletion or integration of overlapping boxes with respect to boxes generated by grouping while enlarging the boxes. For example, the object detection unit 130 may perform NMS (non-maximum suppression) and padding processes.

As shown in FIG. 4B, the object detection unit 130 crops an original image using each of boxes b0, b1, b2 and determines the shape of each image using an AI image classification neural network to derive a result. For example, the object detection unit 130 distinguishes and determines shapes of nozzles, arms, dispensers, and the like.

The object detection unit 130 extracts the features of the moving object from the box generated based on the AI image classification neural network.

The AI image classification neural network has faster processing performance than an object detection neural network and high image classification accuracy, and requires a relatively small amount of learning data to reduce processing load.

Further, the object detection unit 130 detects the status object using the AI image classification neural network.

The object detection unit 130 detects the vector object using an AI segment detection neural network. In order to detect the vector object, the object detection unit 130 generates segments through noise suppression preprocessing and binary outline detection a using computer vision.

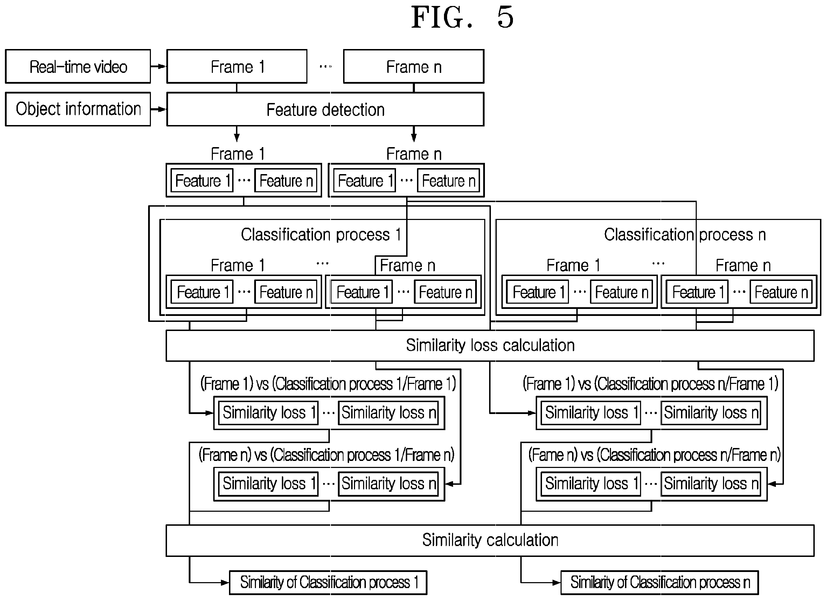

FIG. 5 is a reference view illustrating a process-classification process of the deep learning based real-time process monitoring system according to the embodiment of the present invention.

Referring to FIG. 5, the process classification unit 140 automatically classifies a process based on a video.

The process classification unit 140 performs real-time feature detection in each frame of the video and analyzes the degree of similarity by comparing real-time feature patterns obtained through real-time feature detection with pre-classified process feature patterns.

The process classification unit 140 performs a matching operation through analysis of the feature pattern by a branch method.

The process classification unit 140 classifies the process with a process feature pattern having the highest similarity according to a result of similarity analysis with respect to the extracted real-time feature patterns.

The process classification unit 140 may perform parallel processing with respect to the pre-classified process feature patterns by previously sliding the pre-classified process features to compare all of the feature patterns classified in each frame with the pre-classified process features in classification of the process.

Accordingly, the process classification unit 140 improves classification performance by processing resources through parallelization in process classification requiring a large amount of resources.

The process classification unit 140 may automatically perform process classification based on start and end of each of pre-classified processes.

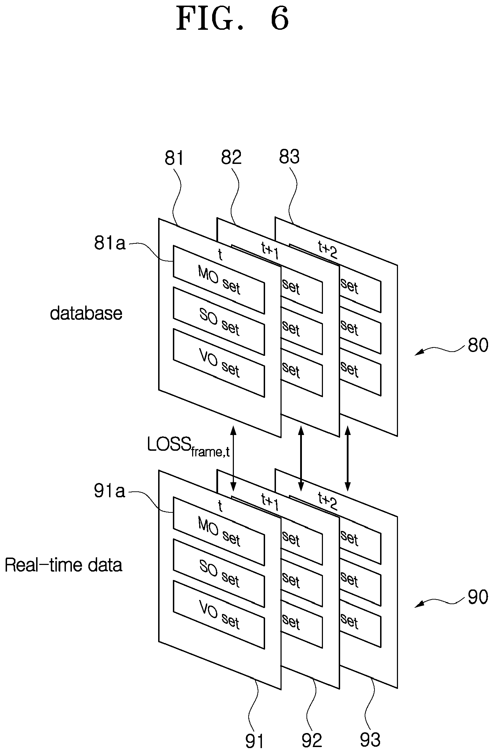

FIG. 6 is a reference view illustrating a loss function of a feature set in the process-classification process of FIG. 5.

Referring to FIG. 6, the process classification unit 140 classifies the process through extraction of the features of the object.

For example, the process classification unit 140 classifies the process according to the degree of similarity through detection of a feature set or the real-time feature patterns, when the object detection unit 130 extracts the features of the moving object, such as a robot arm moving or machining an object during the process, a rotating member, and the like.

The process classification unit 140 sets a moving object feature set (MO set) by grouping the features of the moving object as one set among a plurality of features extracted from a video.

Further, the process classification unit 140 sets a status object feature set (SO set) constituted by the features of the status object and a vector object feature set (VO set) constituted by the features of the vector object among the plurality of features extracted from the video.

The process classification unit 140 uses coordinates, width, and height of a bounding box for each moving object MO as features as detailed factors.

A set in which the state of the moving object MO is defined is expressed by Equation 1.

<Equation 1>

$$MO_{state} = \{ (x_k, y_k, w_k, h_k) \mid x, y, w, h \in R \}$$

Here, (x, y) is reference coordinates of a left upper end of a target bounding box, w is the width of the target bounding box, and h is the height thereof.

The process classification unit 140 defines states that the status object can have with respect to the status object SO and may define a set defining the status object SO as expressed by Equation 1, in which k denotes the number of states.

<Equation 2>

$$SO_{state} = \left\{ a_k \;\middle|\; \left\lfloor \frac{1}{k} \right\rfloor , k \in N_1 \right\}$$

As described above, k denotes the number of values that a single status object can have. For example, for a gate, k may be defined as 3, that is, "open," "closed," and "unknown."

In addition, the process classification unit 140 may define a linear object having a certain direction, such as a water stream, a laser beam, and the like, as the vector object VO.

The process classification unit 140 defines the coefficient of points that an object can have as V and sets V+2 intermediate equivalent points including a start point and an arrival point to use these points as features.

Accordingly, a set in which the state of the vector object VO is defined is expressed by Equation 3.

<Equation 3>

$$VO_{state} = \{ (x'_k, y'_k) \;\mid\; 1 \leq k \leq V+2 , (x'_k, y'_k) \in E \}$$

The set of the moving object, the set of the status object, and the set of the vector object defined as above may be applied to a loss function to calculate differences between the objects

The process classification unit 140 may compare a first object with a second object using the loss function and may compare first data of the first object with second data of the first object using the loss function.

The process classification unit 140 may define the loss function with respect to the moving object state MOstate, as expressed by Equation 4.

<Equation 4>

$$LOSS_{MO} = \varepsilon_{coord} \sum_{i=0}^{B} \left[ (x_i - \hat{x_i})^2 + (y_i - \hat{y_i})^2 \right]$$

$$+ \varepsilon_{shape} \sum_{i=0}^{B} \left[ (\sqrt{w_i} - \sqrt{\hat{w_i}})^2 + (\sqrt{h_i} - \sqrt{\hat{h_i}})^2 \right]$$

Here, $\varepsilon_{coord}$ and $\varepsilon_{shape}$ are constants that impart a penalty for each feature, B is the number of moving objects, and an attribute marked with a hat (^) represents data that is pre-classified and stored in the database (DB).

In Equation 4, for each of w and h, since a bounding box of the object can vary depending on an observed angle, a square root value is used to impose a smaller penalty than a penalty for the location.

For the status object state (SOstate), the loss function may be defined as in Equation 5.

<Equation 5>

$$LOSS_{SO} = \sum_{i=0}^{B} (a_i - \hat{a_i})^2$$

Here, S is the number or status objects (SO).

For the vector object (VOstate), the loss function may be defined as in Equation 6.

<Equation 6>

$$LOSS_{VO}$$

$$= \frac{2\left(\sqrt{(x'_1-\widehat{x_1})^2+(y'_1-\widehat{y_1})^2}+\sqrt{(x'_{(V+2)}-\widehat{x_{(V+2)}})^2+(y'_{(V+2)}-\widehat{y_{(V+2)}})^2}\right)+\sum_{i=2}^{V+1}\sqrt{(x'_i-\widehat{x_i})^2+(y'_i-\widehat{y_i})^2}}{V+2}$$

$$(x'_i,y'_i)\in E, (\widehat{x_i},\widehat{y_i})\in \widehat{E}$$

In order to emphasize accuracy of a starting point and an arrival point among the points of the vector object, the penalty for the starting point and the arrival point is set to be twice that of the other points.

The process classification unit 140 defines a loss function for a real-time monitoring situation upon monitoring of a video acquired in real time through the video acquisition unit 170 while the process is carried out.

For example, the process classification unit 140 compares a first moving object feature set (MO set) 81a with respect to a first moving object stored in the database at timestamp t with a second moving object feature set (MO set) 91a with respect to the first moving object extracted in real time using the loss function, and uses a comparison result as the standard for process classification.

Here, the abnormality detection unit 150 detects an abnormality in the process by calculating a difference for the moving object based on a result value of the loss function.

The database (DB) 40 stores moving object features, status object features, and vector object features in which features are detected from a frame at timestamp t for each process.

The database (DB) 40 stores a moving object feature set that is a set of the moving object features, a status object feature set that is a set of the status object features, and a vector object feature set that is a set of the vector object features.

In addition, the database (DB) 40 stores process feature sets including the moving object feature set, the status object feature set and the vector object feature set at each timestamp.

Upon detection of the features from the frame at timestamp t in real-time monitoring, the process classification unit 140 acquires the moving object features, the status object features and the vector object features for each object, and generates the moving object feature set, the status object feature set, and the vector object feature set as the features sets.

The process classification unit 140 generates real-time feature sets including the moving object feature set, the status object feature set, and the vector object feature set, which are set in real time at each timestamp.

The process classification unit 140 calculates a loss value between a first process feature set 81 including the MO set 81a, the SO set, and the VO set at timestamp t and a first real-time feature set 91 including the MO set 91a, the SO set, and the VO set at timestamp t.

The process classification unit 140 calculates a loss value between a first process feature set 81 including the MO set 81a, the SO set, and the VO set at timestamp t and a first real-time feature set 91 including the MO set 91a, the SO set, and the VO set at timestamp t.

Further, the process classification unit 140 calculate a loss value between a second process feature set 82 and a second real-time feature set 92 at timestamp t+1 and a loss value between a third process feature set 83 and a third real-time feature set 93 at timestamp t+2. A loss value between a process feature set and a real-time feature set extracted from a real-time frame at timestamp t may be defined by Equation 7.

<Equation 7>

$$LOSS_{MO}(t), \ LOSS_{SO}(t), LOSS_{VO}(t)$$

$$LOSS_{frame}(t) = \varepsilon_{MO}LOSS_{MO}(t) + \varepsilon_{SO}LOSS_{SO}(t) + \varepsilon_{VO}LOSS_{VO}(t)$$

Here, $\varepsilon_{MO}$, $\varepsilon_{SO}$, and $\varepsilon_{VO}$ are coefficients used to equalize effects of the moving object (MO), the state object (SO), and the vector object (VO).

The process classification unit 140 may calculate a loss function $LOSS_{frame}(t)$ between the real-time feature set 81 and the process feature set (91) extracted from a t-frame in real-time monitoring to use the loss function as a measure of whether the t-frame is similar to a frame of a specific process at timestamp t.

In addition, for (e-s) timestamps from timestamp s to timestamp e, the process classification unit 140 may calculate loss values between the real-time feature sets 90 of each real-time frame and the process feature sets 80 stored in the database (DB) 40 and a process of summing these loss values and dividing a result by the number of timestamps may be defined as a time-series loss function, as shown in Equation 8.

<Equation 8>

$$LOSS_{time}(s,e) = \frac{\sum_{i=s}^{e} LOSS_{frame}(i)}{e-s}$$

The process classification unit 140 may determine which process and range is most similar to those in a specific range of s to e in real-time monitoring using the time-series loss function.

The process classification unit 140 sets real-time feature patterns from the real-time feature sets 90 of each real-time frame with respect to the (e-s) timestamps from timestamp s to timestamp e, and compares the real-time feature patterns with the process feature patterns composed of the process feature sets 80 stored in the database (DB) 40.

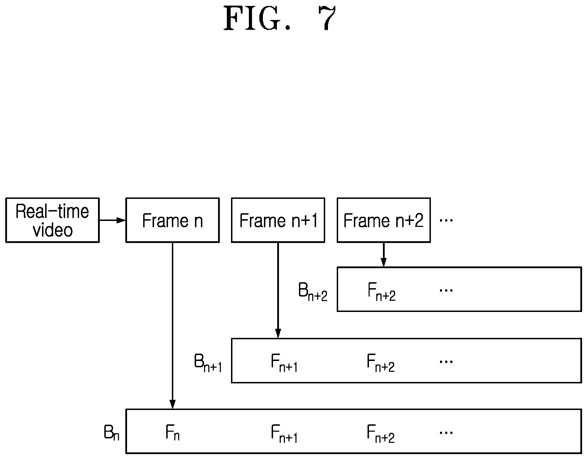

FIG. 7 is a reference view illustrating a method of processing a video in frame units in the process-classification process of FIG. 5.

As shown in FIG. 7, the process classification unit 140 is used for pattern matching to compare the process feature patterns Pn with the real-time feature patterns extracted from the real-time video frame.

The process classification unit 140 performs pattern matching between the pre-classified process feature patterns Pn and the real-time feature patterns extracted from the real-time video. At this time, a new branch Bn is started for each frame Fn of the real-time video, and frames Fn, Fn+1,... , Fn+m received after the corresponding start frame constitute one branch.

The process classification unit 140 compares the branches Bn constituted in the above method with each of the pre-classified process feature patterns Pn and calculates a loss value and the degree of similarity to classify the process.

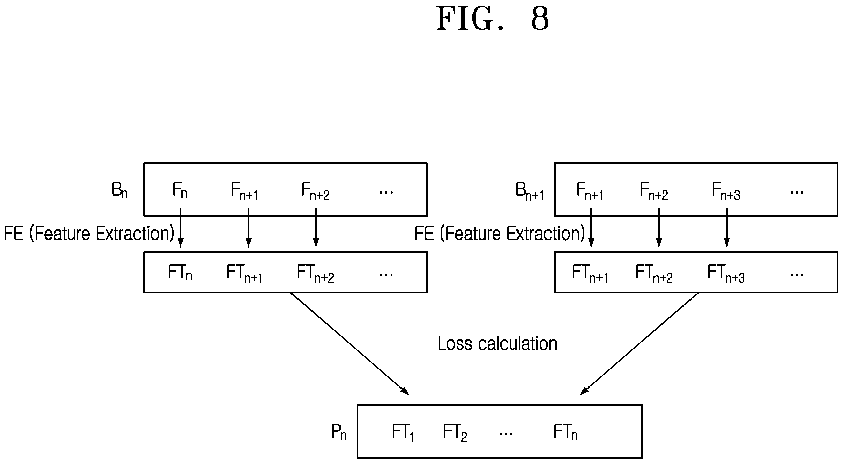

FIG. 8 is a reference view illustrating a method of matching patterns in the process-classification process shown in FIG. 5.

As shown in FIG. 8, the process classification unit 140 performs matching operation by comparing the real-time feature patterns of the branches for each frame with the process feature patterns.

The process classification unit 140 performs similarity comparison through calculation of loss values between the real-time feature sets of each branch in each frame and the process feature set of the corresponding process feature patterns with reference to timestamps and the loss values may be calculated according to $LOSS_{frame}(t, p, b)$.

A $LOSS_{frame}(t)$ result value is determined as the definition of the loss function between feature sets of a branch b for a process p and the feature set of Equation 7 described above.

The process classification unit 140 may calculate a time-series loss function for each branch according to Equation 9.

<Equation 9>

$$LOSS_{time}(s,e,p,b) = \frac{\sum_{t=s}^{e} LOSS_{frame}(t,p,b)}{e-s}$$

$$LOSS_{time}(s,e,p,b) < T(threshold)$$

In Equation 9, $LOSS_{time}(s, e, p, b)$ is a time-series loss function for each branch from time s to time e in the branch b.

If the loss calculation result is less than a threshold, the process classification unit 140 determines that the process feature pattern of the process p corresponding to a timestamp zone [s, e] is similar to the real-time feature pattern of the branch b at timestamp t ($s \le t \le e$).

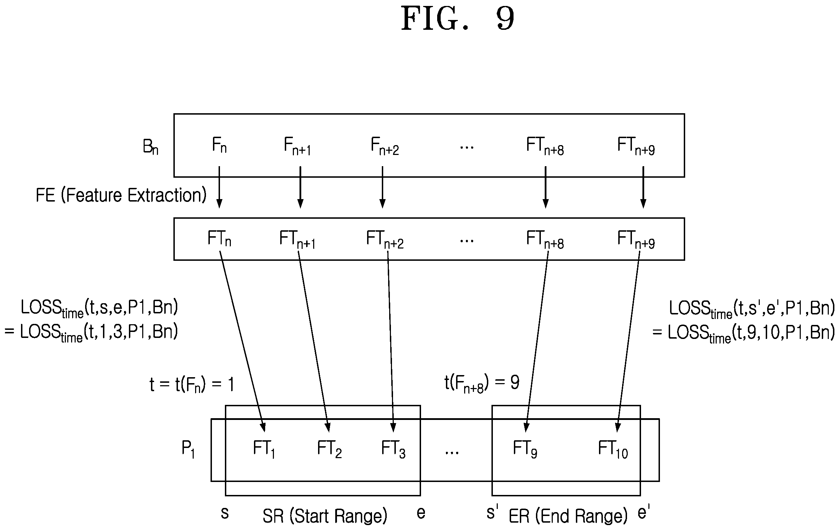

FIG. 9 is a reference view illustrating a method of determining start and end of a process in the deep learning based real-time process monitoring system according to the embodiment of the present invention.

As shown in FIG. 9, the process classification unit 140 determines start and end of the process.

The process classification unit 140 selects a start examination zone SR and an end examination zone ER in the process feature pattern to perform loss examination with the real-time feature pattern for each branch in a real-time video.

Upon examination of start and end of the process, the process classification unit 140 calculates a loss value between feature sets (FT1-FT3) (FT9, FT10) corresponding to the start examination zone or the end examination zone of a process P1 and feature sets detected from real-time frames and determines a time when the loss value becomes less than T (threshold) as a start point or an end point of the process.

[s, e] and [s', e'] used for start examination and end examination are calculated by Equation 10.

$$<\text{Equation 10}>$$

$$s = 1, \; e = SRP$$

$$s' = t(P_n) - ERP$$

$$e' = t(P_n)$$

SR (Start Range) is a process start examination zone, SRP (Start Range Proportion) is the ratio of the start examination zone to a process time (SR=t(Pn)*SRP), ER (End Range) is a process end examination zone, ERP (End Range Proportion) is the ratio of the end examination zone to the process time (ER=t(Pn)*ERP), t is a time function for calculation of timestamps, and t(Pn) represents an overall process time of the $n^{\text{th}}$ classification process (Pn).

When the loss value of the corresponding branch exceeds a certain threshold, the process classification unit 140 considers that this result does not match processes stored in the database, and deletes the branch at the corresponding time to prevent the matching operation from being additionally carried out for resource and performance efficiency.

In addition, in order to determine an exact process start time and an exact process end time, the process classification unit 140 performs not only threshold comparison, but also an operation of finding a time point at which the loss value becomes the minimum value, upon calculation of the loss value. Even when the process classification unit 140 finds a time point when the loss value is smaller than the threshold, the process classification unit 140 may perform an operation of finding a local minimum at which a subsequent loss value becomes the minimum value, instead of determining the time point as start and end of the process.

When the process start time is set at an early time point, there can be a problem of increasing an error in a result of similarity comparison in the frame. However, the process classification unit 140 can solve the problem of increasing an error in the result of similarity comparison by setting the process start time and the process end time through this process.

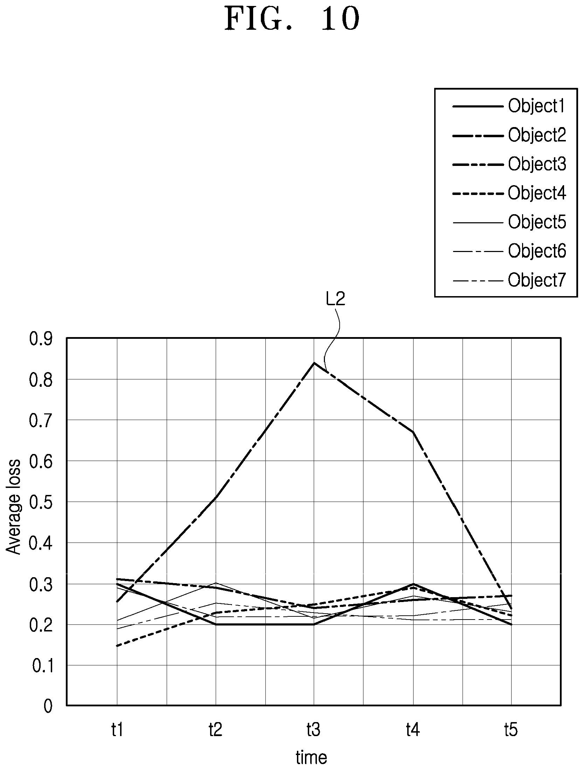

FIG. 10 is a graph depicting change in loss value of each object according to time in the deep learning based real-time process monitoring system according to the embodiment of the present invention.

As shown in FIG. 10, the abnormality detection unit 150 determines whether a corresponding process is normally performed in the process-classification process of the process classification unit 140 described above.

In classification of the process, the abnormality detection unit 150 compares the process feature patterns with the real-time feature patterns and detects an abnormality based on a loss value calculated through a loss function.

Further, the abnormality detection unit 150 detects an abnormality by determining whether features of a detected object in detection of the features of the object by the object detection unit 130 corresponds to an object state of the process, based on a result value of the loss function.

The abnormality detection unit 150 may determine an abnormality of a specific object based on loss values with respect to a plurality of objects.

When a loss value of one object is greater than a predetermined value, the abnormality detection unit 150 determines an abnormality depending on a period of time in which the loss value becomes a high value.

When the loss value of one object is greater than or equal to a predetermined value, the abnormality detection unit 150 determines that the object has an abnormality, when the period of time in which the loss value becomes large is greater than or equal to a preset period of time. Even when the loss value of the object is greater than or equal to a predetermined value, the abnormality detection unit 150 excludes the corresponding object in abnormality determination in the case where the loss value is reduced to a predetermined value or less within a preset period of time.

Even when a loss value of one object becomes large, the abnormality detection unit 150 excludes the corresponding object in abnormality determination in the case where the loss value becomes similar to a loss value of another object. In addition, even when the loss value of one object becomes large, the abnormality detection unit 150 excludes the corresponding object in abnormality determination in the case where the degree of similarity between the object pattern and the process feature pattern as a comparison target is less than or equal to a predetermined value.

For example, assuming that a threshold of an average loss value is 0.4, the abnormality detection unit 150 determines that an object has an abnormality when the average loss value of the object varies in different ways than average loss values of other objects and is maintained at the threshold or more from t2 to t4 or t5, as in the second object L2.

Here, the abnormality detection unit 150 excludes a certain process in abnormality determination when the degree of similarity between the process and a comparison target process is less than a predetermined value.

The record management unit 160 provides data so as to allow visual confirmation of a detected abnormality.

The record management unit 160 visualizes the corresponding data by storing loss values of features from every single object and analyzing changes in the overall process upon completion of a certain process through the process-classification process.

The record management unit 160 stores data about progression of the process, the feature patterns of the object detection unit 130, the classification process of the process classification unit 140, abnormality detection data of the abnormality detection unit 150, and analysis data of change trends over time in the data unit 183.

In addition, the record management unit 160 retrieves preset data and premeasured data from the database 40 to compare with real-time data and stores data with respect to a completed process in the database (DB) 40 upon completion of the process.

The controller 110 may output generated data through the input/output unit 181. In addition, the controller 110 may transmit result data generated by process monitoring to an external server or a designated terminal through the communication unit 182.

Accordingly, the system and method according to the present invention can determine whether a certain process is normal and can detect whether an object has an abnormality while detecting a progress state of the process through a real-time video.

Although some embodiments have been described herein, it should be understood by those skilled in the art that these embodiments are given by way of illustration only, and that various modifications, changes, and alterations can be made without departing from the spirit and scope of the present invention. Therefore, the scope of the present invention should be limited only by the accompanying claims and equivalents thereto.

**Claims**

1. A process monitoring system comprising:

   a learning device performing deep learning through classification of an object to be recognized in a process into a moving object, a status object and a vector object in registration of the object; and
   a monitoring device extracting features with respect to the moving object, the status object and the vector object from a real-time video acquired during the process based on a model trained by the learning device, classifying the process through comparison of a real-time feature pattern set from a set of the extracted features with a pre-stored process pattern, and monitoring a progress state of the process through detection of abnormalities of the process and the object

2. The process monitoring system according to claim 1, wherein the monitoring device comprises:

   an video acquisition unit comprising a plurality of cameras provided to equipment performing the process;
   an object detection unit classifying the object in the process into the moving object, the status object and the vector object and detecting the features of the object from the real-time video;
   a process classification unit analyzing the detected features of the object in frame units to detect the real-time feature pattern and classifying the process according to a degree of similarity through comparison of the real-time feature pattern with the process feature pattern; and
   an abnormality detection unit detecting an abnormality from the real-time feature pattern and the features of the object.

3. The process monitoring system according to claim 2, wherein the object detection unit acquires a difference between a frame of a first time and a frame of a second time through analysis of an video in frame units with respect to the moving object to detect a change of the object included in each frame and performs post-processing through expansion and multiplication with respect to the change.

4. The process monitoring system according to claim 3, wherein the object detection unit performs outline detection and grouping with respect to a frame subjected to post-processing, performs deletion or integration of overlapping boxes among boxes generated by grouping while enlarging the boxes, and extracts the features of the moving object by determining a shape of each of images of the boxes using an AI image classification neural network.

5. The process monitoring system according to claim 2, wherein the process classification unit analyzes the degree of similarity through comparison of the real-time feature pattern with the process feature pattern to classify the process with a process feature pattern having the highest degree of similarity.

6. The process monitoring system according to claim 5, wherein the process classification unit performs a matching operation through analysis of the process feature pattern and the real-time feature pattern by a branch method.

7. The process monitoring system according to claim 5, wherein the process classification unit performs parallel processing with respect to a plurality of process feature patterns by previously sliding the process features to compare the real-time feature pattern extracted from each frame with the plurality of process feature patterns.

8. The process monitoring system according to claim 2, wherein the process classification unit sets a feature set with respect to each of the moving object, the status object and the vector object having features detected from a frame at timestamp t, compares a preset process feature set with a real-time feature set acquired in real time to calculate a loss function, and calculates a loss value through a loss function acquired through comparison of feature sets with respect to a plurality of frames with each other and a loss value through a time-series loss function according to the number of timestamps with respect to the plurality of frames.

9. The process monitoring system according to claim 2, wherein the process classification unit sets a new branch for each frame of the video, calculates a loss value through comparison of the real-time feature pattern with the process feature pattern in each branch, and determines the degree of similarity based on the loss value.

10. The process monitoring system according to claim 11, wherein, when a loss value calculated through comparison of a first real-time feature pattern with a first process feature pattern is less than a preset threshold in the range of a first time to a second time, the process classification unit determines that the first real-time feature pattern is similar to the first process feature pattern in a branch from the first time to the second time.

11. The process monitoring system according to claim 2, wherein the process classification unit sets a start examination zone and an end examination zone with respect to the process feature pattern based on data with respect to a start time and an end time of the process, and performs loss examination with the real-time feature pattern for each branch of the real-time video to determine that the process is started or ended when a loss value between a feature set with respect to the start examination zone or the end examination zone and a feature set of the real-time feature pattern is smaller than a second threshold.

12. The process monitoring system according to claim 2, wherein the abnormality detection unit detects an abnormality of the process based on a loss value calculated through a loss function with respect to the process feature pattern and the real-time feature pattern in classification of the process.

13. [217] The process monitoring system according to claim 2, wherein the abnormality detection unit calculates a loss value by comparing a plurality of features extracted corresponding to a plurality of objects with pre-stored data and detects an abnormality of a certain object according to the loss value, a change of the loss value over time, and a period of time for which the loss value is maintained at a predetermined value or more, with respect to the plurality of objects. [218]

14. The process monitoring system according to claim 13, wherein the abnormality detection unit excludes a corresponding object in abnormality determination even in the case where any one of the plurality of objects has an abnormality, when the degree of similarity between the real-time feature pattern and the process feature pattern is less than or equal to a predetermined value.

15. A method of driving a deep learning based real-time process monitoring system, comprising:

registering an object to be recognized in a process through classification of the object into a moving object, a status object and a vector object, followed by performing deep learning through test operation of the process; extracting features with respect to the moving object, the status object and the vector object from a real-time video acquired during the process based on trained data; classifying the process through comparison of a real-time feature pattern set from a set of the extracted features with a pre-stored process pattern; detecting an abnormality by monitoring the features of the object and actual progression of the process; and storing data with respect to a progress state of the process.

**16.** The method according to claim 15, wherein the step of extracting features comprises:

tracking and detecting the moving object by mapping an object detection result between frames of the real-time video through tracking; acquiring a difference between a frame of a first time and a frame of a second time through analysis of the real-time video in frame units, followed by detecting a change of the object included in each frame to perform post-processing through expansion and multiplication with respect to the change; performing outline detection and grouping with respect to a frame subjected to post-processing; performing deletion or integration of overlapping boxes with respect to boxes generated by grouping while enlarging the boxes; and extracting the features of the moving object by determining a shape of each of images of the boxes using an AI image classification neural network.

**17.** The method according to claim 15, wherein the step of classifying the process further comprises: analyzing the degree of similarity through comparison of the real-time feature pattern with the process feature pattern to classify the process with a process feature pattern having the highest degree of similarity.

**18.** The method according to claim 15, wherein the step of classifying the process further comprises:

setting a feature set with respect to each of the moving object, the status object and the vector object having features detected from a frame at timestamp t; comparing a real-time feature set acquired in real time with a preset process feature set to calculate a loss function; and calculating a loss value through a loss function acquired through comparison of feature sets with respect to a plurality of frames with each other and a loss value through a time-series loss function according to the number of timestamps with respect to the plurality of frames.

**19.** The method according to claim 15, wherein the step of classifying the process further comprises:

setting a start examination zone and an end examination zone with respect to the process feature pattern based on data with respect to a start time and an end time of the process; performing loss examination with the real-time feature pattern for each branch of the real-time video; and determining that the process is started or ended when a loss value between a feature set with respect to the start examination zone or the end examination zone and a feature set of the real-time feature pattern is smaller than a second threshold.

**20.** The method according to claim 15, wherein the step of detecting an abnormality further comprises:

comparing a plurality of features extracted corresponding to a plurality of objects with pre-stored data to calculate each loss value, followed by detecting an abnormality of a certain object according to the loss value with respect to the plurality of objects, a change of the loss value over time, and a period of time for which the loss value is maintained at a predetermined value or more; and excluding the corresponding object in abnormality determination even in the case where any one of the plurality of objects has an abnormality, when the degree of similarity between the real-time feature pattern and the process feature pattern is less than or equal to a predetermined value.

# FIG. 1

# FIG. 2

# FIG. 3

Start

Register object of process — S310

Generate and learn learning model for each object — S320

Start process — S330

Take videos — S340

Detect object feature from video — S350

Set feature set in frame units and detect feature pattern — S360

Analyze similarity between feature pattern and process pattern — S370

Classify process through matching — S380

S390

Process or object abnormal?

No

Yes

Detect abnormality and output alarm — S400

Analyze change trend of process and object — S410

Store process data — S420

End

# FIG. 4A

post($c_n$)

# FIG. 4B

# FIG. 5

```
┌─────────────────┐     ┌─────────────────┐   ...   ┌─────────────────┐
│  Real-time video│ ──► │     Frame 1     │         │     Frame n     │
└─────────────────┘     └─────────────────┘         └─────────────────┘
┌─────────────────┐     ┌───────────────────────────────────────────┐
│ Object information│ ─► │            Feature detection              │
└─────────────────┘     └───────────────────────────────────────────┘
```

Frame 1       Frame n

| Feature 1 ... Feature n | Feature 1 ... Feature n |

**Classification process 1**

Frame 1    ...    Frame n

| Feature 1 ... Feature n | Feature 1 ... Feature n |

**Classification process n**

Frame 1    ...    Frame n

| Feature 1 ... Feature n | Feature 1 ... Feature n |

**Similarity loss calculation**

(Frame 1) vs (Classification process 1/Frame 1)

| Similarity loss 1 ... Similarity loss n |

(Frame 1) vs (Classification process n/Frame 1)

| Similarity loss 1 ... Similarity loss n |

(Frame n) vs (Classification process 1/Frame n)

| Similarity loss 1 ... Similarity loss n |

(Fame n) vs (Classification process n/Frame n)

| Similarity loss 1 ... Similarity loss n |

**Similarity calculation**

| Similarity of Classification process 1 |

| Similarity of Classification process n |

EP 4 137 901 A1

# FIG. 6

# FIG. 7

FIG. 8

# FIG. 9

$B_n$ | $F_n$ | $F_{n+1}$ | $F_{n+2}$ | ... | $FT_{n+8}$ | $FT_{n+9}$

FE (Feature Extraction)

$FT_n$ | $FT_{n+1}$ | $FT_{n+2}$ | ... | $FT_{n+8}$ | $FT_{n+9}$

$LOSS_{time}(t,s,e,P1,Bn)$
$= LOSS_{time}(t,1,3,P1,Bn)$

$LOSS_{time}(t,s',e',P1,Bn)$
$= LOSS_{time}(t,9,10,P1,Bn)$

$t = t(F_n) = 1$

$t(F_{n+8}) = 9$

$P_1$ | $FT_1$ | $FT_2$ | $FT_3$ | ... | $FT_9$ | $FT_{10}$

s   SR (Start Range)   e   s'   ER (End Range)   e'

EP 4 137 901 A1

# FIG. 10

## INTERNATIONAL SEARCH REPORT

| International application No. |
|---|
| **PCT/KR2021/011162** |

| A. | CLASSIFICATION OF SUBJECT MATTER |
|---|---|

G05B 23/02(2006.01)i; **G06K** 9/62(2006.01)i; **G06N 20/00**(2019.01)i

According to International Patent Classification (IPC) or to both national classification and IPC

| B. | FIELDS SEARCHED |
|---|---|

Minimum documentation searched (classification system followed by classification symbols)

G05B 23/02(2006.01); B01D 53/04(2006.01); B01D 53/047(2006.01); G06N 3/02(2006.01); G06T 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공정 감시(process monitoring), 객체(object), 손실함수(loss function), 이상 검출 (anomaly detection)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | KR 10-1909477 B1 (SEMES CO., LTD.) 18 October 2018 (2018-10-18)<br>See paragraphs [0051]-[0075]; claim 1; and figure 2. | 1-8,12-13,15-18<br>9-11,14,19-20 |
| Y | LI, Xiang et al. Deep Learning-Based Intelligent Process Monitoring of Directed Energy Deposition in Additive Manufacturing with Thermal Images. 48th SME North American Manufacturing Research Conference. 23 June 2020, pp. 643-649.<br>See sections 2.4 and 3.3; and figures 1 and 9. | 1-8,12-13,15-18 |
| A | KR 10-1988596 B1 (S.A.L TECH CO., LTD.) 12 June 2019 (2019-06-12)<br>See paragraphs [0047]-[0060]; claim 1; and figure 3. | 1-20 |
| A | KR 10-2144444 B1 (HANWOUL ENGINEERING INC.) 13 August 2020 (2020-08-13)<br>See paragraphs [0036]-[0058]; claim 1; and figure 1. | 1-20 |
| A | US 9483049 B2 (MAEDA, Shunji et al.) 01 November 2016 (2016-11-01)<br>See column 5, line 44 – column 6, line 51; claim 1; and figures 2 and 5. | 1-20 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 November 2021** | **23 November 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/011162**

| Patent document cited in search report | | | Publication date (day/month/year) | Patent family member(s) | | | Publication date (day/month/year) |
|---|---|---|---|---|---|---|---|
| KR | 10-1909477 | B1 | 18 October 2018 | KR | 10-2018-0050945 | A | 16 May 2018 |
| KR | 10-1988596 | B1 | 12 June 2019 | | None | | |
| KR | 10-2144444 | B1 | 13 August 2020 | | None | | |
| US | 9483049 | B2 | 01 November 2016 | EP | 2477086 | A1 | 18 July 2012 |
| | | | | EP | 2477086 | A4 | 04 May 2016 |
| | | | | JP | 2011-059790 | A | 24 March 2011 |
| | | | | JP | 5363927 | B2 | 11 December 2013 |
| | | | | US | 2012-0166142 | A1 | 28 June 2012 |
| | | | | WO | 2011-027607 | A1 | 10 March 2011 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102277162